# EUROPEAN PATENT APPLICATION

(11) **EP 4 693 428 A1**
(43) Date of publication of application: **11.02.2026**
(21) Application number: 25193869.2
(22) Date of filing: 04.08.2025
(51) Int. Cl.: H01M 4/04, H01M 10/44, H01M 4/131, H01M 4/1315

(54) **PRETREATMENT METHOD OF POSITIVE ELECTRODE ACTIVE MATERIAL, POSITIVE ELECTRODE, AND RECHARGEABLE LITHIUM BATTERIES**

(30) Priority: 06.08.2024 KR 20240104824
(71) Applicant: SAMSUNG SDI CO., LTD., Yongin-si, Gyeonggi-do 17084 (KR)
(72) Inventor: SEONG, Wonmo, 17084 Yongin-si (KR); HASE, Naoyuki, 17084 Yongin-si (KR); HA, Jihoon, 17084 Yongin-si (KR)
(74) Representative: Marks & Clerk LLP

(57) **Abstract**

A pretreatment method is provided for activating a lithium-manganese-rich positive electrode active material includes performing charge/discharge under a condition in which a charge current density (I¹) is higher than a discharge current density (I²), and a positive electrode and a rechargeable lithium battery to which the pretreatment method is applied are provided.

## Description

### BACKGROUND

### 1. Field

A pretreatment method of a positive electrode active material, a positive electrode, and a rechargeable lithium battery are disclosed.

### 2. Description of the Related Art

Lithium-manganese-rich (LMR) materials, as a positive electrode active material for rechargeable lithium batteries, are layered positive electrode active materials with an excess of lithium and a relatively high manganese content. In addition to oxidation-reduction of existing transition metals, LMR materials may be applied with a new principle of oxygen oxidation-reduction (O-redox) to exhibit high capacity. Further LMR materials may be provided as an ultra-low-cost next-generation positive electrode active material due to the LMR materials' high proportion of inexpensive manganese.

However, LMR materials have the disadvantage of low coulombic efficiency in an initial formation cycle. This means that a significant portion of the lithium ions that are deintercalated from the positive electrode and intercalated into the negative electrode during charging do not return to the positive electrode during discharging, but rather the lithium ions remain in the negative electrode while operating the battery. Because of this, when designing a battery, a larger amount of negative electrode is used than required by the actual capacity of the battery. And even if low-cost materials are used for the positive electrode, the cost increases as the amount of negative electrode increases, which causes the cost advantage of the positive electrode material to be offset.

Therefore, to lower negative to positive (N/P) ratio (which is a loading level ratio between the negative electrode and positive electrode in full-cell design) in rechargeable lithium batteries using LMR material positive electrodes and maximize the low-cost advantage of the positive electrode itself, it is necessary to improve the coulombic efficiency in the initial formation cycle.

### SUMMARY

Provided are a method of enhancing the initial coulombic efficiency and improving processability of lithium-manganese-rich positive electrode active materials, thereby providing for cost-effective rechargeable lithium batteries that have high-capacity, high-efficiency, and long cycle-life characteristics.

In some example embodiments, a pretreatment method for activating a lithium-manganese-rich positive electrode active material is provided, which includes performing charge/discharge under a condition in which a charge current density (I¹) is greater than a discharge current density (I²).

In some example embodiments, provided is a positive electrode for a rechargeable lithium battery to which a pretreatment according to the above method is applied.

In some example embodiments, provided is a rechargeable lithium battery, which includes the positive electrode, a negative electrode, and an electrolyte, as a rechargeable lithium battery to which a pretreatment according to the above method is applied.

At least some of the above and other features of the invention are set out in the claims.

According to a pretreatment method according to some example embodiments, the initial coulombic efficiency may be increased without increasing the formation time of a lithium-manganese-rich positive electrode active material, and the discharge capacity and reversible discharge capacity ratio may be improved.

### BRIEF DESCRIPTION OF THE DRAWINGS

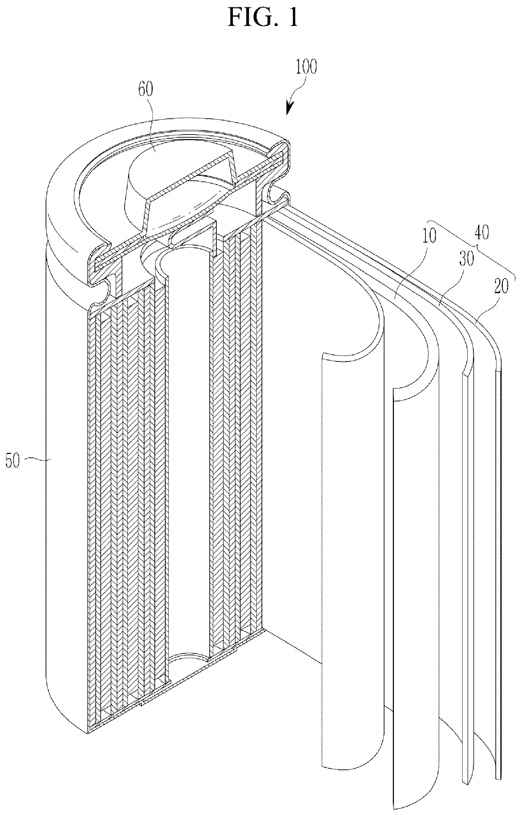

FIGS. 1 to 4 are schematic views illustrating rechargeable lithium batteries according to embodiments of the present disclosure.

### DETAILED DESCRIPTION

Hereinafter, specific embodiments will be described in detail so that those of ordinary skill in the art can easily implement the present disclosure. However, this disclosure may be embodied in many different forms and is not limited to the example embodiments expressly set forth herein.

The terminology used herein is used to describe embodiments only and is not intended to limit the full scope of the present disclosure. A singular expression includes the plural expression unless the context clearly dictates otherwise.

As used herein, "combination thereof" means a mixture, a laminate, a composite, a copolymer, an alloy, a blend, a reaction product, and the like of the constituents.

Herein, it should be understood that terms such as "comprises," "includes," or "have" are intended to designate the presence of an embodied feature, number, step, element, or a combination thereof, but do not preclude the possibility of the presence or addition of one or more other features, numbers, steps, elements, or a combination thereof.

In the drawings, the thickness of layers, films, panels, regions, etc., may be exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

An average particle diameter may be measured by a method well known to those skilled in the art, for example, may be measured by a particle size analyzer, or may be measured by a transmission electron microscope image or a scanning electron microscope image. Alternatively, it is possible to obtain an average particle diameter value by measuring using a dynamic light scattering method, performing data analysis, counting the number of particles for each particle size range, and calculating from this. As used herein, when a definition is not otherwise provided, the average particle diameter means the diameter (D₅₀) of particles having a cumulative volume of 50 volume% in the particle size distribution. More specifically, when a definition is not otherwise provided, the average particle diameter means a diameter (D₅₀) of particles having a cumulative volume of 50 volume% in the particle size distribution that is obtained by measuring the size (diameter or length of the major axis) of about 20 particles at random in a scanning electron microscope image.

Herein, "or" is not to be construed as an exclusive meaning, for example, "A or B" is construed to include A, B, A+B, and the like. "Metal" is interpreted as a concept including ordinary metals, transition metals and metalloids (semi-metals). "Voltage" refers to the measured value based on the lithium redox reaction voltage (vs. Li/Li⁺) unless otherwise stated.

### Method of Pretreating Lithium-manganese-rich Positive Electrode Active Material

A lithium-manganese-rich (LMR) positive electrode active material refers to a positive electrode active material for a rechargeable lithium battery including a layered lithium-manganese composite oxide containing lithium, manganese, and oxygen. A LMR may be a material having a lithium-excess composition in which the lithium mole ratio exceeds 1 based on a total amount of metals excluding lithium, and an LMR may contain manganese of approximately greater than or equal to about 30 mol% based on a total amount of metals excluding lithium. The LMR material is price efficient due to its high proportion of inexpensive manganese, and it has an advantage of high capacity because it may implement capacity according to an oxidation-reduction of oxygen as well as transition metals. However, there is a problem with LMR materials in that the irreversible capacity increases due to low coulombic efficiency in the first charge/discharge process. A method to increase the charge/discharge efficiency of the formation process by simply lowering the current density may be considered, but this would increase the time required for the formation process, thereby reducing the battery production rate, and, thus, limiting its application to actual processes. In some example embodiments, a pretreatment method is provided to improve the initial coulombic efficiency and increase the discharge capacity without increasing the total formation time by appropriately controlling the current density in the formation charge/discharge.

The pretreatment may be understood as the first charge/discharge process after battery manufacturing and may be expressed as a formation process or formation cycle. The pretreatment may be understood as a process of manufacturing a rechargeable lithium battery equipped with an electrode assembly including, for example, a positive electrode including the positive electrode active material, a separator, and a negative electrode, with the process including injecting an electrolyte solution including a non-aqueous organic solvent and a lithium salt to the electrode assembly, and performing charge/discharge cycles one or more times.

By the pretreatment process, activation of the positive electrode active material is induced. Specifically, the redox reaction of the positive electrode active material may be activated through the pretreatment, and the redox reaction by the transition metal and/or the redox reaction of oxygen may be activated. For example, activation of the oxygen redox reaction may be induced through a change in the crystal structure of the LMR positive electrode active material by the pretreatment.

A method of pretreating a lithium-manganese-rich positive electrode active material according to some example embodiments includes performing charge/discharge under a condition in which a charge current density (I¹) is greater than a discharge current density (I²). The LMR layered positive electrode active material may have a rate characteristic during charging that is superior to the rate characteristic during discharge. By using these characteristics, the current density at the time of initial charging may be greater than the current density at the time of initial discharge. And by performing preprocessing, the charge/discharge efficiency may be significantly improved without increasing the total formation time, and the discharge capacity and reversible discharge capacity ratio may be improved. The current density may be expressed as, for example, C-rate, and the unit of C-rate may be C.

The charge/discharge process may be the first charge/discharge process under a condition in which a charge current density (I¹) is greater than a discharge current density (I²). In the first charge/discharge, the ranges of the charge current density (I¹) and discharge current density (I²) are not limited. For example, I¹ may be greater than 0.1 C and I² may be less than 0.1C. More specifically, I¹ may be, for example, greater than or equal to about 0.11 C and less than or equal to about 5 C, greater than or equal to about 0.11 C and less than or equal to about 3 C, greater than or equal to about 0.11 C and less than or equal to about 2 C, greater than or equal to about 0.11 C and less than or equal to about 1 C, or greater than or equal to about 0.11 C and less than or equal to about 0.5 C (e.g. greater than or equal to about 0.12 C and less than or equal to about 5 C, greater than or equal to about 0.12 C and less than or equal to about 3 C, greater than or equal to about 0.12 C and less than or equal to about 2 C, greater than or equal to about 0.12 C and less than or equal to about 1 C, or greater than or equal to about 0.12 C and less than or equal to about 0.5 C; greater than or equal to about 0.125 C and less than or equal to about 5 C, greater than or equal to about 0.125 C and less than or equal to about 3 C, greater than or equal to about 0.125 C and less than or equal to about 2 C, greater than or equal to about 0.125 C and less than or equal to about 1 C, or greater than or equal to about 0.125 C and less than or equal to about 0.5 C; greater than or equal to about 0.2 C and less than or equal to about 5 C, greater than or equal to about 0.2 C and less than or equal to about 3 C, greater than or equal to about 0.2 C and less than or equal to about 2 C, greater than or equal to about 0.2 C and less than or equal to about 1 C, or greater than or equal to about 0.2 C and less than or equal to about 0.5 C). I² may be about 0.001 C to about 0.09 C, about 0.005 C to about 0.09 C, about 0.01 C to about 0.09 C, about 0.05 C to about 0.085 C, about 0.055 C to about 0.08 C, or about 0.055 C to about 0.07 C.

In another example, I¹ may be greater than 0.2 C and I² may be less than 0.2C. More specifically, I¹ may be, for example, greater than or equal to about 0.21 C and less than or equal to about 5 C, greater than or equal to about 0.21 C and less than or equal to about 3C, greater than or equal to about 0.21 C and less than or equal to about 2 C, or greater than or equal to about 0.21 C and less than or equal to about 1 C. Also, I² may be about 0.001 C to about 0.19 C, about 0.005 C to about 0.19 C, about 0.01 C to about 0.19 C, or about 0.05 C to about 0.19 C, or about 0.1 C to about 0.185 C.

A ratio of I¹ to I² (I¹/I²) may be, for example, about 1.1 to about 30, for example about 1.2 to about 25, about 1.3 to about 22, about 1.4 to about 20, about 1.1 to about 20, about 1.5 to about 19, about 2 to about 15, about 2.5 to about 10, or about 2.9 to about 9. When the I¹/I² ratio is in these ranges, the charge/discharge efficiency during formation may be significantly improved without increasing the formation time.

When I¹ and I² are each expressed as C-rate, a difference between I¹ and I² (I¹ - I²) may be about 0.01 C to about 1.5 C, for example, about 0.02 C to about 1.2 C, about 0.03 C to about 1.0 C, about 0.01 C to about 1.0 C, about 0.04 C to about 0.95 C, about 0.07 C to about 0.7 C, about 0.1 C to about 0.5 C, or about 0.13 C to about 0.45 C, but is not limited thereto. When the difference between I¹ and I² is in these ranges, the charge/discharge efficiency during formation may be significantly improved without increasing the formation time.

According to some example embodiments, the pretreatment time, which is a sum of a charging time (T¹) determined by I¹ and a discharging time (T²) determined by I², may be substantially the same as or shorter than the pretreatment time when charge/discharge are performed by setting the charge current density and the discharge current density to I³, which satisfies I¹>I³>I². For example, if I¹ is set to more than about 0.1 C and I² is set to less than about 0.1 C, a total pretreatment time required may be substantially the same as or shorter than the pretreatment time required when charge/discharge are performed with the charge and discharge current densities set to the same value of about 0.1 C. That is, according to embodiments of the present disclosure, by making the charge current density during formation be greater than the discharge current density, the charge/discharge efficiency may be significantly improved. Further, the formation time does not increase and the battery production rate does not decrease, which is advantageous for application to actual processes.

According to embodiments of the present disclosure, coulombic efficiency, which is the ratio (C²/C¹) of the first discharge capacity (C²) to the first charge capacity (C¹) in the first charge/discharge according to the pretreatment method, may be greater than or equal to about 89.0%.

An upper limit voltage of the first charge in the pretreatment method may be greater than or equal to about 4.55 V. By performing the initial charge at an upper limit voltage of greater than or equal to about 4.55 V, the reversible capacity due to the oxidation-reduction of the transition metal of the lithium-manganese-rich positive electrode active material and the oxidation-reduction of oxygen may be activated. The upper limit voltage at the time of the first charge may be, for example, greater than or equal to about 4.60 V or greater than or equal to about 4.65 V.

The pretreatment method may further include performing a second charge/discharge after the first charge/discharge. In the second charge/discharge, the charge current density and discharge current density can be the same as I⁴, for example, I⁴≥I¹>I², or I⁴>I¹>I², or I¹>I⁴>I². If the first and second charge/discharge cycles are performed under these conditions as the pretreatment, the initial coulombic efficiency may be significantly improved while the discharge capacity and reversible discharge capacity ratio may be improved.

The charge upper limit voltage in the second charge/discharge may be set lower than the charge upper limit voltage in the first charge/discharge. For example, in the second charge/discharge, the upper charge limit voltage may be less than about 4.55 V or less than or equal to about 4.50 V. Additionally, the upper limit voltage of the second charge/discharge may be set to a high voltage range of greater than or equal to about 4.3 V, for example, about 4.3 V to about 4.50 V, or about 4.4 V to about 4.45 V. If the first and second charge/discharge cycles are performed under these conditions as the pretreatment, the initial coulombic efficiency may be significantly improved while the discharge capacity and reversible discharge capacity ratio may be improved.

In some embodiments, the charge capacity is C¹ and the discharge capacity is C² in the first charge/discharge, when the charge current density and the discharge current density in the first charge/discharge are both I³, satisfying I¹>I³>I², the charge capacity is C³¹, and the discharge capacity is C³², and when the discharge capacity in the second charge/discharge is C⁴, C²/C¹ > C^{3.2}/C^{3.1} may be satisfied, and also C⁴/C¹ > C⁴/C^{3.1} may be satisfied. That is, in some embodiments, when the charge current density in the first charge/discharge is greater than the discharge current density, the initial charge/discharge efficiency may be greater than the initial charge/discharge efficiency when the charge/discharge is performed at a value between the charge current density and the discharge current density. In addition, in a case where the charge current density in the first charge/discharge is greater than the discharge current density according to some example embodiments, the reversible discharge capacity ratio, which is the ratio of the second discharge capacity to the first charge capacity, may be greater than the reversible discharge capacity ratio in a case where the first charge/discharge is performed at a value between the charge current density and the discharge current density.

The reversible discharge capacity ratio may mean the ratio (C⁴/C¹) of the discharge capacity (C⁴) in the second charge/discharge to the charge capacity (C¹) in the first charge/discharge. The first charge/discharge may refer to the first charge/discharge conducted at a voltage of greater than or equal to about 4.55 V, and may refer to a charge/discharge performed under a condition in which a charge current density is greater than a discharge current density according to some example embodiments, and the second charge/discharge may refer to a charge/discharge conducted at a voltage of less than about 4.55 V following the first charge/discharge. According to some embodiments, the reversible discharge capacity ratio may be greater than or equal to about 81%.

The reversible discharge capacity ratio may affect the N/P ratio, which is a loading level ratio between the negative electrode and positive electrode in full-cell design. For example, a lower reversible discharge capacity ratio requires a higher loading level of negative electrode to be placed in the cell to achieve the same positive electrode capacity, which reduces the total energy density. In other words, the higher the reversible discharge capacity ratio, the more advantageous it is for increasing the energy density of a rechargeable lithium battery.

The lithium-manganese-rich positive electrode active material may exhibit capacity by the redox reaction of a transition metal while also exhibiting capacity by the redox reaction of oxygen. By the pretreatment method, the lithium-manganese-rich positive electrode active material may be activated, and activation of the redox reaction of the transition metal and oxygen may be induced through a change in the crystal structure of the positive electrode active material.

The lithium-manganese-rich positive electrode active material may be, for example, represented by a metal oxide including at least one of Chemical Formulas 1 and 2.

[Chemical Formula 1] Li₁₊ₓ₁(Ni_{y1}Mn_{z1}M¹_{1-y1-z1})₁₋ₓ₁O_{2-b1}X¹_{b1}

In Chemical Formula 1, 0.03≤x1≤0.33, 0.1≤y1≤0.7, 0.3≤z1≤0.9, and 0≤b1≤0.1, M¹ is one or more elements of Al, B, Ba, Ca, Ce, Cr, Cu, Fe, Mg, Mo, Nb, Si, Sn, Sr, Ti, V, W, Y, Zn, and Zr, and X¹ is one or more of F, P, and S. In some embodiments, M¹ may not be present (i.e. 1-y1-z1=0); in some embodiments, X¹ may not be present (i.e. b1=0); in some embodiments, both M¹ and X¹ may not be present (i.e. 1-y1-z1=0 and b1=0).

[Chemical Formula 2] x2(LiNi_{y2}Mn_{z2}M²_{1-y2-z2}O_{2-b2}X²_{b2})+x3(Li₂(Mnₜ₁M²₁₋ₜ₁)O_{3-b3}X²_{b3})

In Chemical Formula 2, 0≤x2≤0.94, 0.06≤x3≤1, 0.5≤x2+x3≤1, 0.5≤y2≤1.0, 0≤z2≤0.5, 0≤b2≤0.1, 0.9≤t1≤1 and 0≤b3≤0.1, M² is one or more of Al, B, Ba, Ca, Ce, Cr, Cu, Fe, Mg, Mo, Nb, Si, Sn, Sr, Ti, V, W, Y, Zn, and Zr, and X² is one or more of F, P, and S. In some embodiments, M² may not be present (i.e. 1-y2-z2=0 and 1-t1=0); in some embodiments, X² may not be present (i.e. b2=0 and b3=0); in some embodiments, both M² and X² may not be present (i.e. 1-y2-z2=0 and 1-t1=0, and b2=0 and b3=0).

Chemical Formula 1 may represent a solid-solution phase, and Chemical Formula 2 may represent a composite phase. According to some embodiments, the positive electrode active material may include either a solid-solution phase represented by Chemical Formula 1, a composite phase represented by Chemical Formula 2, or both. For example, the positive electrode active material may be a material in which a composite and a solid solution are mixed, or a material in which a composite and a solid solution competitively coexist.

The solid solution is a solid mixture in which different elements are completely and uniformly mixed. Herein, solid solution may mean that other elements are mixed into the solid crystal and distributed uniformly, exhibiting a state similar to a solution in which a solute is uniformly distributed in a solvent. The solid solution may be the formation of a continuous quasi-isostructural (e.g., continuum quasi-isostructural) compound with new properties due to the strong interrelationship of two or more individual components. The solid solution is homogeneous and may have a single phase or a single crystal structure. In contrast, a composite is made up of two or more materials that are combined and may be made up of materials with different physical properties, with the materials remaining physically distinct. The composite may be heterogeneous and have two or more compositions and two or more phases or crystal structures.

A lithium-manganese-rich positive electrode active material according to some embodiments of the present disclosure may have a molar ratio of lithium to a total metal excluding lithium of greater than or equal to about 1.06 and less than or equal to about 2, for example about 1.06 to about 1.8, about 1.06 to about 1.6, about 1.06 to about 1.5, about 1.1 to about 1.45, about 1.1 to about 1.4, about 1.1 to about 1.3, about 1.1 to about 1.2, about 1.2 to about 1.8, about 1.2 to about 1.5, or about 1.3 to about 1.45.

In Chemical Formula 1, (1+x1) is a molar ratio of lithium, and (1+x1)/(1-x1) refers to a ratio of a lithium content to a total content of metal excluding lithium. In Chemical Formula 1, the range of x1 may be 0.03≤x1≤0.33, for example 0.03≤x1≤0.30, or 0.03≤x1≤0.2, for example 0.03≤1x≤0.15, 0.03≤x1≤0.13, 0.03≤x1≤0.11, or 0.03≤x1≤0.09.

According to some embodiments, a lithium-manganese-rich positive electrode active material may contain nickel, wherein the nickel amount may be about 10 mol% to about 70 mol% based on 100 mol% of the total metal excluding lithium, for example, about 20 mol% to about 65 mol%, about 25 mol% to about 60 mol%, about 25 mol% to about 40 mol%, or about 40 mol% to about 65 mol%. For example, the positive electrode active material may be a mid-nickel material having a nickel amount of about 45 mol% to about 70 mol%, a low-nickel material having a nickel amount of less than or equal to about 10 mol% and less than about 45 mol%, or a mixture thereof. In lithium-manganese-rich positive electrode active materials, the nickel amount may be increased to improve the capacity, or the nickel amount may be decreased to lower production cost and appropriately limit the proportion of oxidation-reduction of oxygen.

In Chemical Formula 1, y1 represents a molar ratio of nickel in the solid solution and satisfies 0.1≤y1≤0.7, and y1 may be, for example, 0.2≤y1≤0.66, 0.25≤y1≤0.6, 0.25≤y1≤0.4, or 0.4≤y1≤0.66.

In Chemical Formula 2, y2 represents a nickel content of the layered material in the composite phase. y2 satisfies 0.5≤y2≤1.0, and may be, for example, 0.5≤y2≤0.94, 0.5≤y2≤0.80, 0.55≤y2≤0.80, or 0.55≤y2≤0.75.

In the lithium-manganese-rich positive electrode active material according to some embodiments, the manganese content may be greater than or equal to about 30 mol% based on 100 mol% of the total metal excluding lithium, for example, about 30 mol% to about 90 mol%, about 35 mol% to about 80 mol%, about 40 mol% to about 75 mol%, or about 35 mol% to about 60 mol%, or about 60 mol% to about 75 mol%. When the manganese content is in these ranges, the capacity can be improved cost effectively, and the long-life characteristics can be implemented by appropriately controlling the amount of capacity implemented by oxygen oxidation-reduction.

In Chemical Formula 1, z1 represents a molar ratio of manganese and satisfies 0.3≤z1≤0.9, and z1 may be, for example, 0.35≤z1≤0.8, 0.4≤z1≤0.75, 0.35≤z1≤0.6, or 0.6≤z1≤0.75.

In a lithium-manganese-rich positive electrode active material according to some embodiments of the present disclosure, a cobalt amount based on 100 mol% of the total metal excluding lithium may be 0 mol% to about 1 mol%, or 0 mol% to about 0.1 mol%, or 0 mol% to about 0.01 mol%.

The positive electrode active material may be in the form of secondary particles each of which is formed by agglomeration of a plurality of primary particles. The average particle diameter (D₅₀) of the positive electrode active material may be about 1 µm to about 20 µm, for example about 5 µm to about 15 µm, or about 8 µm to about 12 µm. The positive electrode active material may be a mixture of small particles having an average particle diameter (D₅₀) of about 0.5 µm to about 8 µm and large particles having an average particle diameter (D₅₀) of about 9 µm to about 20 µm. Here, the average particle diameter may be obtained by measuring the sizes (e.g., particle diameter, major axis, or major axis length) of about 20 random particles in a scanning electron microscope (SEM) image of the positive electrode active materials, obtaining a particle size distribution, and taking the size of the particles having a cumulative volume of 50 volume% as the average particle diameter (D₅₀).

### Positive Electrode

In some embodiments, a positive electrode for a rechargeable lithium battery is provided to which a pretreatment is applied according to the aforementioned method. The positive electrode includes a positive electrode current collector and a positive electrode active material layer on the positive electrode current collector. The positive electrode active material layer includes the aforementioned lithium-manganese-rich positive electrode active material. The positive electrode active material layer may further include a different type of positive electrode active material in addition to the aforementioned positive electrode active material, and the positive electrode active material layer may optionally further include a binder, a conductive material, or a combination of a binder and a conductive material.

### Binder

The binder improves binding properties of positive electrode active material particles with one another and with a current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon. But the present disclosure is not limited to these examples.

### Conductive Material

The conductive material is included to provide electrode conductivity and any electrically conductive material may be used that does not cause a chemical change in the battery. Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminium, silver, and the like; a conductive polymer such as a polyphenylene derivative; or a mixture of these examples.

An amount of the binder and the conductive material may be about 0.5 wt% to about 5 wt% based on 100 wt% of the positive electrode active material layer.

The positive electrode current collector may include aluminium, but the present disclosure is not limited thereto.

### Rechargeable Lithium Battery

In some embodiments of the present disclosure, a rechargeable lithium battery is provided to which pretreatment is applied according to the aforementioned method. A rechargeable lithium battery may include a positive electrode including the lithium-manganese-rich positive electrode active material, a negative electrode, and an electrolyte. The rechargeable lithium battery may be a lithium-ion battery using a liquid electrolyte, an all-solid-state rechargeable battery, or a semi-solid rechargeable battery using a solid electrolyte. Hereinafter, the composition of a lithium-ion battery is described in detail.

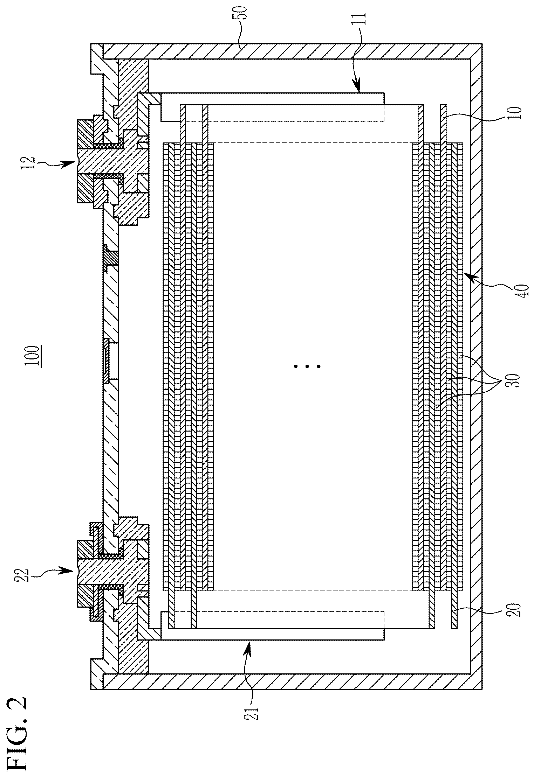

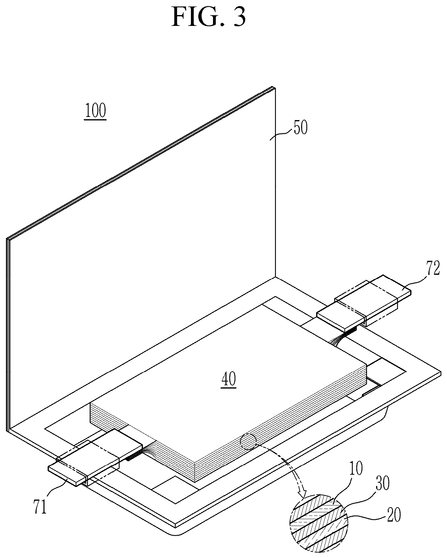

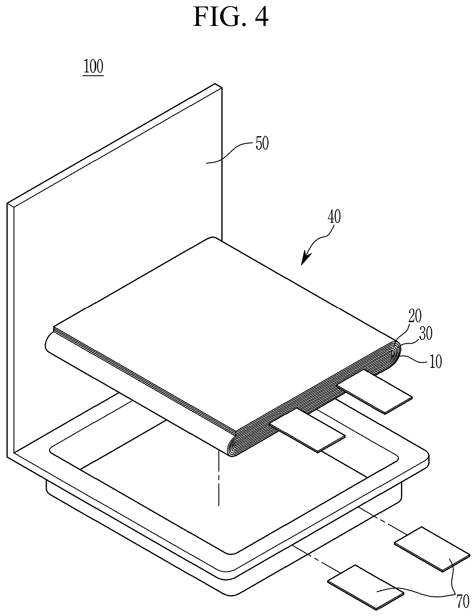

The rechargeable lithium battery may be classified as cylindrical, prismatic, pouch, coin, etc. depending on its shape. FIGS. 1 to 4 are schematic views illustrating rechargeable lithium batteries according to some example embodiments. FIG. 1 shows a cylindrical battery, FIG. 2 shows a prismatic battery, and FIGS. 3 and 4 show pouch-type batteries. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 sealing the case 50 as shown in FIG. 1. In addition, in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70, that is, a positive electrode tab 71 and a negative electrode tab 72 forming an electrical path for inducing the current formed in the electrode assembly 40 to outside of the battery.

### Negative Electrode

The negative electrode may include a current collector and a negative electrode active material layer on the current collector. The negative electrode may further include a negative electrode active material, a binder, a conductive material, or a combination thereof.

### Negative Electrode Active Material

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination of crystalline carbon and amorphous carbon as a carbon-based negative electrode active material. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn (e.g. Na, K, Rb, Cs, Be, Mg, Ca, Sr, Si, Sb, Pb, In, Zn, Ba, Ge, Al, and Sn).

The material capable of doping/dedoping lithium may be a Si-based negative electrode active material or a Sn-based negative electrode active material. The Si-based negative electrode active material may include silicon, a silicon-carbon composite, SiOₓ (0<x≤2), a Si-Q alloy, or a combination thereof. In the formula SiO_{X}, Q is an element selected from an alkali metal, an alkaline-earth metal, a Group 13 element, a Group 14 element (excluding Si), a Group 15 element, a Group 16 element, a transition metal, a rare earth element, and a combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof (e.g. Mg, Ca, Sr, Ba, Sc, Y, Ti, Zr, Hf, V, Nb, Ta, Cr, Mo, W, Re, Fe, Pb, Ru, Os, Rh, Ir, Pd, Pt, Cu, Ag, Au, Zn, Cd, B, Al, Ga, Sn, In, Tl, Ge, P, As, Sb, Bi, S, Se, Te, and a combination thereof). The Sn-based negative electrode active material may be Sn, SnOₓ (0<x≤2)(for example), SnO₂, a Sn alloy, or a combination thereof.

The silicon-carbon composite may be a composite of silicon and amorphous carbon. An average particle diameter (D₅₀) of the silicon-carbon composite particles may be, for example, about 0.5 µm to about 20 µm. According to some embodiments, the silicon-carbon composite may be in the form of silicon particles and amorphous carbon coated on the surfaces of the silicon particles. For example, silicon-carbon composite may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, and calcined coke.

When the silicon-carbon composite includes silicon and amorphous carbon, an amount of silicon, based on 100 wt% of the silicon-carbon composite, may be about 10 wt% to about 50 wt% and a content of amorphous carbon may be about 50 wt% to about 90 wt% based on 100 wt% of the silicon-carbon composite. In addition, when the composite includes silicon, amorphous carbon, and crystalline carbon, an amount of silicon may be about 10 wt% to about 50 wt%, an amount of crystalline carbon may be about 10 wt% to about 70 wt%, and an amount of amorphous carbon may be about 20 wt% to about 40 wt%.

Additionally, a thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, or in an oxidized form. The oxidized form of silicon may be represented by SiOₓ (0<x≤2). The atomic content ratio of Si:O, which indicates a degree of oxidation, may be about 99:1 to about 33:67. As used herein, when a definition is not otherwise provided, an average particle diameter (D₅₀) indicates a particle where a cumulative volume is about 50 volume% in a particle size distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of about 1:99 to about 90:10.

### Binder

The binder serves to adhere the negative electrode active material particles to each other and also to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, or a combination thereof.

### Conductive Material

The conductive material is included to provide electrode conductivity and any electrically conductive material may be used as a conductive material unless it causes a chemical change in a battery. Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminium, silver, and the like; a conductive polymer such as a polyphenylene derivative; or a mixture thereof.

An amount of the negative electrode active material may be about 95 wt% to about 99.5 wt% based on 100 wt% of the negative electrode active material layer, and an amount of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof, and may be in the form of a foil, sheet, or foam. A thickness of the negative electrode current collector may be, for example, about 1 µm to about 20 µm, about 5 µm to about 15 µm, or about 7 µm to about 10 µm.

### Electrolyte

The electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, decanolide, mevalonolactone, valerolactone, caprolactone, and the like. The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond, and the like; amides such as dimethylformamide; dioxolanes such as 1,3-dioxolane, 1,4-dioxolane, and the like; sulfolanes, and the like.

The non-aqueous organic solvent can be used alone or in a mixture of two or more types. When two or more types are used in a mixture, a mixing ratio can be adjusted according to the desired battery performance, as is widely known to those working in the field.

When using a carbonate-based solvent, a cyclic carbonate and a chain carbonate may be mixed and used. The cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinylethyl carbonate, vinylene carbonate, or an ethylene carbonate-based compound to improve battery cycle-life. Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

A concentration of lithium salt may be within the range of about 0.1 M to about 2.0 M. When the concentration of lithium salt is within this range, the electrolyte solution has appropriate ionic conductivity and viscosity, and, thus, excellent performance can be achieved and lithium ions can move effectively.

### Separator

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of a polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON^{®}, and polytetrafluoroethylene, or a copolymer or a mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acryl-based copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the present disclosure is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

Examples and comparative examples of the present disclosure are described below. However, the following are only examples of the present disclosure, and the present disclosure is not limited to the following examples.

### Comparative Example 1

### 1. Manufacturing of Rechargeable Lithium Battery Cell

Ni_{0.5}Mn_{0.5}(OH)₂ and LiOH were mixed to have a molar ratio of Li/(Ni+Mn)=1.1 and then heated at 5 °C/min under an oxygen atmosphere and maintained at 950 °C and cooled at 5 °C/min to room temperature for a total of 24 hours to prepare a positive electrode active material of 0.43[Li_{1.05}Ni_{0.48}Mn_{0.48}O₂] + 0.57[0.85(LiNi_{0.56}Mn_{0.44}O₂)+0.10(Li₂MnO₃)].

96 wt% of the positive electrode active material, 2 wt% of a polyvinylidene fluoride binder, and 2 wt% of a carbon nanotube conductive material were mixed to prepare positive electrode active material layer slurry, and the slurry was coated on an aluminium foil current collector and then dried and compressed to manufacture a positive electrode. Here, a loading level of the positive electrode active material layer was 10 mg/cm², and a density of the final compressed positive electrode was about 3.5 g/cc.

A polytetrafluoroethylene separator was interposed between the manufactured positive electrode and the lithium counter electrode, and the assembly was inserted into a battery case. An electrolyte solution prepared by dissolving 1 M LiPF₆ in a solvent mixed with ethylene carbonate, ethyl methyl carbonate, and dimethyl carbonate in a volume ratio of 2:4:4 and adding 1.5 wt% of vinylene carbonate was injected into the case, thereby making a rechargeable lithium battery cell by a conventional method.

### 2. Pretreatment Process

The rechargeable lithium battery cell of Example 1 was charged to 4.65 V at a constant current of 0.1 C and subsequently maintained at the voltage to a current of 0.05 C and discharged to 2.5 V at the constant current of 0.1 C at 25 °C to perform first charge/discharge as a formation. Herein, the 0.1 C constant current charging took 10 hours and the 0.1 C constant current discharging took 10 hours, thereby totaling 20 hours.

The cell was then charged to 4.45 V at a constant current of 0.2 C and subsequently maintained at the voltage to a current of 0.05 C and discharged to 2.5 V at the constant current of 0.2 C at 25 °C to perform second charge/discharge.

In the comparative examples and examples, these processes proceeded under a condition of 1 C=200 mA/g.

### Example 1

A rechargeable lithium battery cell was made substantially in the same manner as in Comparative Example 1 except that the first formation charge/discharge was performed by charging to 4.65 V at a constant current of 0.125 C and subsequently maintaining at the voltage to a current of 0.05 C and discharging to 2.5 V at a constant current of 0.083 C at 25 °C in the pretreatment process. The 0.125 C constant current charging took 8 hours, and the 0.083 C constant current discharging took 12 hours, which took a total of 20 hours.

### Example 2

A rechargeable lithium battery cell was made and pretreated substantially in the same manner as in Comparative Example 1 except that the first formation charge/discharge was performed by charging to 4.65 V at a constant current of 0.2 C and subsequently maintaining at the voltage to a current of 0.05 C and discharging to 2.5 V at a constant current of 0.067 C at 25 °C in the pretreatment process. The 0.2 C constant current charging took 5 hours, and the 0.067 C constant current discharging took 15 hours, thereby totaling 20 hours.

### Example 3

A rechargeable lithium battery cell was made and pretreated substantially in the same manner as in Comparative Example 1 except that the first formation charge/discharge was performed by charging to 4.65 V at a constant current of 0.5 C and subsequently maintaining at the voltage to a current of 0.05 C and discharging to 2.5 V at a constant current of 0.056 C at 25 °C in the pretreatment process. The 0.5 C constant current charging took 2 hours, and the 0.056 C constant current discharging took 18 hours, thereby totaling 20 hours.

### Example 4

A rechargeable lithium battery cell was made and pretreated substantially in the same manner as in Comparative Example 1 except that the first formation charge/discharge was performed by charging to 4.65 V at a constant current of 1.0 C and subsequently maintaining at the voltage to a current of 0.05 C and discharging to 2.5 V at a constant current of 0.053 C at 25 °C in the pretreatment process. The 1.0 C constant current charging took 1 hour, and the 0.053 C constant current discharging took 19 hours, thereby totaling 20 hours.

### Comparative Example 2

A rechargeable lithium battery cell was made and pretreated substantially in the same manner as in Comparative Example 1 except that the first formation charge/discharge was performed by charging to 4.65 V at a constant current of 0.056 C and subsequently maintaining at the voltage to a current of 0.05 C and discharging to 2.5 V at a constant current of 0.5 C at 25 °C in the pretreatment process. The 0.056 C constant current charging took 18 hours, and the 0.5 C constant current discharging took 2 hours, thereby totaling 20 hours.

### Comparative Example 3

A positive electrode active material and a rechargeable lithium battery cell were made and pretreated substantially in the same manner as in Comparative Example 1 except that the mole ratio of Ni and Mn was changed to 33:67 in preparing the positive electrode active material precursor. The positive electrode active material of Comparative Example 3 was 0.67(LiNi_{0.50}Mn_{0.50}O₂)+0.33(Li₂MnO₃).

### Example 5

A rechargeable lithium battery cell was made and pretreated substantially in the same manner as in Comparative Example 3 except that the first formation charge/discharge was performed by charging to 4.65 V at a constant current of 0.5 C and subsequently maintaining at the voltage to a current of 0.05 C and discharging to 2.5 V at a constant current of 0.056 C at 25 °C in the pretreatment process. The 0.5 C constant current charging took 2 hours, and the 0.056 C constant current discharging took 18 hours, thereby totaling 20 hours.

### Evaluation Example 1

Examples 1 to 4 and Comparative Examples 1 and 2 were measured with respect to first formation charge capacity and discharge capacity, which are shown in Table 1, and a ratio of the first discharge capacity to the first charge capacity was calculated and shown as coulombic efficiency in Table 1. In addition, second formation charge capacity and discharge capacity thereof were measured and shown in Table 1, and a ratio of the second discharge capacity to the first charge capacity was calculated and shown as a reversible discharge capacity ratio in Table 1.

**Table 1**

| | | | Comp. Ex. 1 | | Comp. Ex. 2 | | Ex. 1 | | Ex. 2 | Ex. 3 | Ex. 4 |
|---|---|---|---|---|---|---|---|---|---|---|---|
| First formation cycle | Charge 4.65 V CC /CV | C-rate | I³ | 0.1 C | I^{3'} | 0.056 C | I¹ | 0.125 C | 0.2 C | 0.5 C | 1 C |
| | | Time (hr) | T^{3.1} | 10 | T^{3.2} | 18 | T¹ | 8 | 5 | 2 | 1 |
| | | Capacity (mAh/g) | C^{3.1} | 240. 9 | C^{3.3} | 240.2 | C¹ | 241 | 241 | 242. 5 | 242. 5 |
| | Discharge 2.5 V CC | C-rate | I³ | 0.1C | I^{3"} | 0.5 C | I² | 0.083 C | 0.06 7 C | 0.05 6 C | 0.05 3 C |
| | | Time (hr) | T^{3.2} | 10 | T^{3.3} | 2 | T² | 12 | 15 | 18 | 19 |
| | | Capacity (mAh/g) | C^{3.2} | 213. 8 | C^{3.4} | 197.2 | C² | 215 | 216 | 217. 4 | 216. 9 |
| | Coulombic efficiency (%) | | C^{3.2}/ C^{3.1} | 88.8 | C^{3.4} /C^{3. 3} | 82.1 | C²/ C¹ | 89.2 | 89.6 | 89.6 | 89.4 |
| Second formation cycle | Charge 4.45 VCC /CV | C-rate | I⁴ | 0.2 C | | | I⁴ | 0.2 C | | | |
| | | Capacity (mAh/g) | - | 199. 4 | - | 181.0 | - | 200.9 | 202. 4 | 204. 2 | 203. 1 |
| | Discharge 4.45 V CC /CV | C-rate | I⁴ | 0.2 C | | | I⁴ | 0.2 C | | | |
| | | Capacity (mAh/g) | C⁴ | 194. 5 | C⁴ | 190.6 | C⁴ | 195 | 195. 3 | 196. 5 | 195. 8 |
| Reversible discharge capacity ratio (%) | | | C⁴/ C^{3.1} | 80.7 | C⁴/ C^{3.1} | 79.3 | C⁴/ C¹ | 80.9 | 81 | 81 | 80.7 |

Referring to Table 1, compared with Comparative Example 1, Examples 1 to 3 exhibited increased discharge capacity and improved coulombic efficiency at the first formation cycle and increased discharge capacity and an improved reversible discharge capacity ratio at the second formation cycle, thereby showing improvement in all aspects. Compared with Comparative Example 1, Example 4 exhibited improved discharge capacity and coulombic efficiency at the first formation cycle and increased discharge capacity at the second formation cycle but an equivalent reversible discharge capacity ratio.

### Evaluation Example 2

Example 5 and Comparative Example 3 were measured with respect to first formation charge capacity and discharge capacity, with the results being shown in Table 2, and a ratio of the first discharge capacity to first charge capacity was calculated and is shown as coulombic efficiency in Table 2. In addition, second formation charge capacity and discharge capacity thereof were measured and shown in Table 2, and a ratio of the second discharge capacity to the first charge capacity was calculated and shown as a reversible discharge capacity ratio in Table 2.

**Table 2**

| | | | Comparative Example 3 | | Example 5 | |
|---|---|---|---|---|---|---|
| First formation cycle | Charge 4.65 V CC/CV | C-rate | I³ | 0.1 C | I¹ | 0.5 C |
| | | Time (hr) | T^{3.1} | 10 | T¹ | 2 |
| | | Capacity (mAh/g) | C^{3.1} | 295.8 | C¹ | 298.0 |
| | Discharge 2.5 V CC | C-rate | I³ | 0.1 C | I² | 0.056 C |
| | | Time (hr) | T^{3.2} | 10 | T² | 18 |
| | | Capacity (mAh/g) | C^{3.2} | 258.1 | C² | 265.5 |
| | Coulombic efficiency (%) | | C^{3.2}/C^{3.1} | 87.3 | C²/C¹ | 89.1 |
| Second formation cycle | Charge 4.45 V CC/CV | C-rate | I⁴ | 0.2 C | I⁴ | 0.2 C |
| | | Capacity (mAh/g) | - | 228.4 | - | 235.3 |
| | Discharge 4.45 V CC/CV | C-rate | I⁴ | 0.2 C | I⁴ | 0.2 C |
| | | Capacity (mAh/g) | C⁴ | 225.5 | C⁴ | 228.3 |
| Reversible discharge capacity ratio (%) | | | C⁴/C^{3.1} | 76.2 | C⁴/C¹ | 76.6 |

Referring to Table 2, compared with Comparative Example 3, Example 5 exhibited increased discharge capacity and improved coulombic efficiency at the first formation cycle and increased discharge capacity and an improved reversible discharge capacity ratio at the second formation cycle.

Evaluation Example 1 was made to evaluate a mid-nickel LMR material, and Evaluation Example 2 was made to evaluate a low-nickel LMR material. The results shown in Tables 1 and 2 show that, regardless of types of the materials or nickel content, a pretreatment method according to embodiments of the present disclosure significantly improves initial charge/discharge efficiency (coulombic efficiency), increases first and second discharge capacities, and improves a reversible discharge capacity ratio. In addition, this strategy is applicable to all types of LMR materials.

While this disclosure has been described in connection with what is presently considered to be practical example embodiments, it is to be understood that the disclosure is not limited to the disclosed embodiments. On the contrary, to the disclosure covers various modifications and equivalent arrangements.

### <Description of Symbols>

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A pretreatment method comprising:
performing a charge/discharge under a condition in which a charge current density (I¹) is greater than a discharge current density (I²),
wherein the pretreatment method activates a lithium-manganese-rich positive electrode active material.

2. The pretreatment method as claimed in claim 1, wherein a ratio of I¹ to I² is about 1.1 to about 30.

3. The pretreatment method as claimed in claim 1 or claim 2, wherein when I¹ and I² are each expressed as C-rate, a difference between I¹ and I² is about 0.01 C to about 1.5 C.

4. The pretreatment method as claimed in any one of claims 1 to 3, wherein when I¹ and I² are each expressed as C-rate, I¹ is greater than about 0.1C and I² is less than about 0.1C, or I¹ is greater than about 0.2C and I² is less than about 0.2C.

5. The pretreatment method as claimed in any one of claims 1 to 4, wherein a pretreatment time, which is a sum of a charging time determined by I¹ and a discharging time determined by I², is substantially the same as or shorter than the pretreatment time when charge/discharge are performed by setting the charge current density and the discharge current density to I³, which satisfies I¹>I³>I².

6. The pretreatment method as claimed in any one of claims 1 to 5, wherein coulombic efficiency, which is a ratio of a discharge capacity to a charge capacity in the charge/discharge, is greater than or equal to about 89.0%.

7. The pretreatment method as claimed in any one of claims 1 to 6, wherein an upper limit voltage of a charge in the charge/discharge is greater than or equal to about 4.55 V (vs. Li/Li⁺).

8. The pretreatment method as claimed in any one of claims 1 to 7, wherein the charge/discharge is a first charge/discharge and the pretreatment method further comprises performing a second charge/discharge after the first charge/discharge, and
wherein, in the second charge/discharge, the charge current density and discharge current density are the same as I⁴, with I⁴>I¹>I², or I⁴>I¹>I², or I¹>I⁴>I².

9. The pretreatment method as claimed in claim 8, wherein a charge upper limit voltage in the second charge/discharge is set lower than a charge upper limit voltage in the first charge/discharge;
optionally wherein the charge upper limit voltage in the first charge/discharge is greater than or equal to about 4.55 V (vs. Li/Li⁺), and the charge upper limit voltage in the second charge/discharge is greater than or equal to about 4.3 V and less than about 4.55 V (vs. Li/Li⁺).

10. The pretreatment method as claimed in claim 8 or claim 9, wherein, a charge capacity is C¹ and a discharge capacity is C² in the first charge/discharge, when the charge current density and the discharge current density in the first charge/discharge are both I³, with I¹>I³>I², the charge capacity is C^{3.1}, and the discharge capacity is C^{3.2}, and
wherein, when the discharge capacity in the second charge/discharge is C⁴, C²/C¹ > C^{3.2}/C^{3.1} and C⁴/C¹ > C⁴/C^{3.1} are satisfied; and/or.
wherein a reversible discharge capacity ratio which is a ratio of the discharge capacity in the second charge/discharge to the charge capacity in the first charge/discharge is greater than or equal to about 81 %.

11. The pretreatment method as claimed in any one of claims 1 to 10, wherein the lithium-manganese-rich positive electrode active material exhibits capacity through a redox reaction by both a transition metal and oxygen.

12. The pretreatment method as claimed in any one of claims 1 to 11, wherein the pretreatment induces activation of an oxygen redox reaction through a change in a crystal structure of the lithium-manganese-rich positive electrode active material.

13. The pretreatment method as claimed in any one of claims 1 to 12, wherein the lithium-manganese-rich positive electrode active material is represented by a metal oxide comprising at least one of Chemical Formula 1 and Chemical Formula 2,
wherein Chemical Formula 1 is:
Li₁₊ₓ₁(Ni_{y1}Mn_{z1}M¹_{1-y1-z1})₁₋ₓ₁O_{2-b1}X¹_{b1}
wherein, in Chemical Formula 1, 0.03≤x1≤0.33, 0.1≤y1≤0.7, 0.3≤z1≤0.9, and 0≤b1≤0.1, M¹ is one or more elements selected from Al, B, Ba, Ca, Ce, Cr, Cu, Fe, Mg, Mo, Nb, Si, Sn, Sr, Ti, V, W, Y, Zn, and Zr, and X¹ is one or more elements selected from F, P, and S,
wherein Chemical Formula 2 is:
x2(LiNi_{y2}Mn_{z2}M²_{1-y2-z2}O_{2-b2}X²_{b2})+x3(Li₂(Mnₜ₁M²₁₋ₜ₁)O_{3-b3}X²_{b3})
wherein, in Chemical Formula 2, 0≤x2≤0.94, 0.06≤x3≤1, 0.5≤x2+x3≤1, 0.5≤y2≤1.0, 0≤z2≤0.5, 0≤b2≤0.1, 0.9≤t1≤1 and 0≤b3≤0.1, M² is one or more elements selected from Al, B, Ba, Ca, Ce, Cr, Cu, Fe, Mg, Mo, Nb, Si, Sn, Sr, Ti, V, W, Y, Zn, and Zr, X² is one or more elements selected from F, P, and S.

14. A positive electrode for a rechargeable lithium battery to which the pretreatment method as claimed in any one of claims 1 to 13 is applied.

15. A rechargeable lithium battery to which the pretreatment method as claimed in any one of claims 1 to 13 is applied, the rechargeable lithium battery comprising a positive electrode, a negative electrode, and an electrolyte.
